# EUROPEAN PATENT APPLICATION

(11) **EP 4 664 962 A1**
(43) Date of publication of application: **17.12.2025**
(21) Application number: 23921155.0
(22) Date of filing: 09.02.2023
(51) Int. Cl.: H04W 16/26, H04W 24/10, H04W 36/30, H04W 84/00

(54) **WIRELESS BASE STATION, WIRELESS RELAY DEVICE, MOBILE BODY, WIRELESS COMMUNICATION SYSTEM, WIRELESS COMMUNICATION METHOD, AND PROGRAM**

(71) Applicant: HONDA MOTOR CO., LTD., Tokyo 105-8404 (JP)
(72) Inventor: OTAKA Masaru, Tokyo 107-8556 (JP); OI Yusuke, Tokyo 107-8556 (JP)
(74) Representative: Weickmann & Weickmann PartmbB
(86) International application number: PCT/JP2023/004450
(87) International publication number: WO 2024/166324

(57) **Abstract**

There is provided a wireless relay device which relays a communication between a terminal device and a wireless base station, the wireless relay device including: a control unit which acquires a measurement result of a communication quality in the wireless relay device; and a communication unit which transmits, to the wireless base station, measurement information indicating the measurement result of the communication quality, in which the communication unit further receives setting information related to setting of the wireless relay device, from the wireless base station, according to transmission of the measurement information to the wireless base station, and the control unit further controls an operation of the wireless relay device based on the setting information received from the wireless base station.

## Description

### BACKGROUND

### 1. TECHNICAL FIELD

The present invention relates to a wireless base station, a wireless relay device, a mobile body, a wireless communication system, a wireless communication method, and a program.

### 2. RELATED ART

Patent Documents 1 to 5 discloses technologies relating to a mobile communication.

### Related Art Documents

### Patent Document

Patent Document 1: Japanese Patent No. 6207397
Patent Document 2: Japanese Patent No. 5365738
Patent Document 3: Japanese Patent Application Publication No. 2020-099032
Patent Document 4: Japanese Patent No. 7119215
Patent Document 5: Japanese Patent Application Publication No. 2017-169197

### Technical Problem

In a wireless relay device which relays a communication between a terminal device and a wireless base station, a problem is to perform an appropriate control, as the wireless relay device, according to a communication quality in the wireless relay device. By resolving the problem described above, the present application makes it possible to enhance stability of the communication for a mobile body which has the wireless relay device. Furthermore, it is possible to more improve traffic safety and contribute to a development of a sustainable transportation system.

### General Disclosure

In a first aspect of the present invention, a wireless relay device is provided. The wireless relay device relays a communication between a terminal device and a wireless base station. The wireless relay device includes a control unit which acquires a measurement result of a communication quality in the wireless relay device. The wireless relay device includes a communication unit which transmits, to the wireless base station, measurement information indicating the measurement result of the communication quality. The communication unit further receives setting information related to setting of the wireless relay device, from the wireless base station, according to transmission of the measurement information to the wireless base station. The control unit further controls an operation of the wireless relay device based on the setting information received from the wireless base station.

In the wireless relay device, when the setting information is received from the wireless base station, the control unit may further generate first setting information related to setting of the terminal device, based on the setting information. The communication unit may further transmit the first setting information to the terminal device.

In any of the wireless relay devices described above, the communication unit may further receive, from the terminal device, measurement information indicating a measurement result of a communication quality in the terminal device. The control unit further may generate second setting information related to setting of the terminal device, based on the measurement information received from the terminal device. The communication unit may further transmit the second setting information to the terminal device.

In any of the wireless relay devices described above, the control unit may further generate third setting information relating to setting of the terminal device. The communication unit may further transmit the third setting information to the terminal device. The third setting information may include at least either setting information for the terminal device to be in a range of the wireless relay device, or setting information for causing the terminal device to prioritize a communication with the wireless relay device.

In a second aspect of the present invention, a mobile body is provided. The mobile body includes any of the wireless relay devices described above.

In a third aspect of the present invention, a program is provided. The program causes a computer to function as any of the wireless relay devices described above.

In a fourth aspect of the present invention, a wireless communication system is provided. The wireless communication system includes any of the wireless relay devices described above; and the wireless base station.

In a fifth aspect of the present invention, a wireless base station is provided. The wireless base station performs a communication with a terminal device via a wireless relay device. The wireless base station includes a communication unit which receives first measurement information indicating a measurement result of a communication quality in the terminal device. The wireless base station includes a control unit which generates first setting information related to setting of the terminal device, and second setting information related to setting of the wireless relay device, based on the first measurement information. The communication unit further transmits the first setting information to the terminal device, and transmits the second setting information to the wireless relay device.

In the wireless base station, the communication unit may further receive second measurement information indicating a measurement result of a communication quality in the wireless relay device. The control unit further may generate third setting information related to setting of the wireless relay device, based on the second measurement information. The communication unit may further transmit the third setting information to the wireless relay device.

In any of the wireless base stations described above, the control unit may further generate fourth setting information related to setting of the terminal device, at least based on one of the second measurement information or the third setting information. The communication unit may further transmit the fourth setting information to the terminal device.

In a sixth aspect of the present invention, a wireless communication system is provided. The wireless communication system includes: any of the wireless base stations described above; and the wireless relay device.

In a seventh aspect of the present invention, a program is provided. The program causes a computer to function as any of the wireless base stations described above.

In an eighth aspect of the present invention, a wireless communication method is provided. The wireless communication method is executed by a wireless relay device which relays a communication between a terminal device and a wireless base station. The wireless communication method includes acquiring a measurement result of a communication quality in the wireless relay device. The wireless communication method includes transmitting, to the wireless base station, measurement information indicating the measurement result of the communication quality. The wireless communication method includes receiving setting information related to setting of the wireless relay device, from the wireless base station, according to transmission of the measurement information to the wireless base station. The wireless communication method includes controlling an operation of the wireless relay device based on the setting information received from the wireless base station.

In a ninth aspect of the present invention, a wireless communication method is provided. The wireless communication method is executed by a wireless base station which performs a communication with a terminal device via a wireless relay device. The wireless communication method includes receiving first measurement information indicating a measurement result of a communication quality in the terminal device. The wireless communication method includes generating first setting information related to setting of the terminal device, and second setting information related to setting of the wireless relay device, based on the first measurement information. The wireless communication method includes transmitting the first setting information to the terminal device, and transmits the second setting information to the wireless relay device.

The summary clause does not necessarily describe all necessary features of the embodiments of the present invention. In addition, the present invention may also be a sub-combination of the features described above.

### BRIEF DESCRIPTION OF THE DRAWINGS

Fig. 1 shows a schematic configuration of a wireless communication system 5 according to an embodiment.
Fig. 2 shows an example of a system configuration of a wireless relay device 110.
Fig. 3 shows an example of a system configuration of a wireless base station 120.
Fig. 4 shows an example of a sequence relating to a wireless communication method which is executed in the wireless communication system 5.
Fig. 5 shows an example of a sequence relating to a wireless communication method which is executed in the wireless communication system 5.
Fig. 6 shows an example of a sequence relating to a wireless communication method which is executed in the wireless communication system 5.
Fig. 7 shows an example of a sequence relating to a wireless communication method which is executed in the wireless communication system 5.
Fig. 8 shows an example of a computer 2000 in which a plurality of embodiments of the present invention can be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

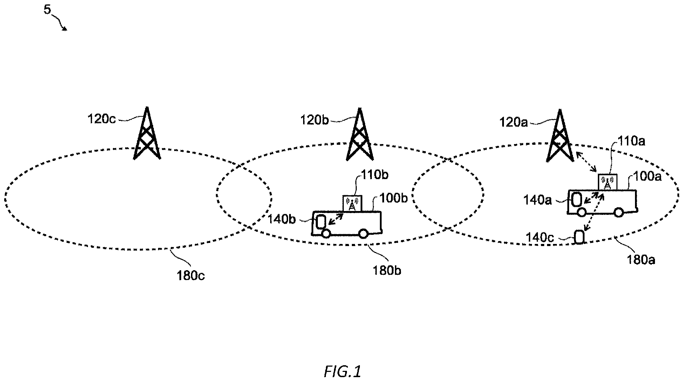

Fig. 1 shows a schematic configuration of a wireless communication system 5 according to an embodiment. The wireless communication system 5 includes: a wireless base station 120a, a wireless base station 120b, and a wireless base station 120c; a wireless relay device 110a and a wireless relay device 110b; a mobile body 100a and a mobile body 100b; and a terminal device 140a, a terminal device 140b, and a terminal device 140c.

In the present embodiment, the wireless base station 120a, the wireless base station 120b, and the wireless base station 120c may be collectively referred to as a "wireless base station 120" with suffixes of the reference signs being omitted. Similarly, the wireless relay device 110a and the wireless relay device 110b may be collectively referred to as a "wireless relay device 110" with suffixes of the reference signs being omitted. Similarly, the mobile body 100a and the mobile body 100b may be collectively referred to as a "mobile body 100" with suffixes of the reference signs being omitted. Similarly, the terminal device 140a, the terminal device 140b, and the terminal device 140c may be collectively referred to as a "terminal device 140" with suffixes of the reference signs being omitted.

The wireless base station 120 is a mobile communication base station which supports one or more mobile communication schemes. Similarly, the wireless relay device 110 and the terminal device 140 are wireless communication devices which support one or more mobile communication schemes. In the present embodiment, the mobile communication scheme supported by the wireless base station 120, the wireless relay device 110, and the terminal device 140 may be, for example, a mobile communication scheme that is used in a mobile communication system such as a fourth generation mobile communication system (4G) or a fifth generation mobile communication system (5G).

The wireless base station 120 is a base station fixed at a specific location. Each of the wireless base stations 120 forms a cell; and by forming the cell, performs a wireless communication with the wireless relay device 110 and the terminal device 140. For example, a cell 180a is a cell formed by the wireless base station 120a, a cell 180b is a cell formed by the wireless base station 120b, and a cell 180c is a cell formed by the wireless base station 120c. In the present embodiment, the cell 180a, the cell 180b, and the cell 180c may be collectively referred to as a "cell 180" with suffixes of the reference signs being omitted.

The wireless relay device 110 has a function for performing a service provision to the terminal device 140, as a wireless base station; and also has a function for receiving a service provision from the wireless base station 120, as a terminal device. The wireless relay device 110 relays a communication between the terminal device 140 and the wireless base station 120. The terminal device 140 can access a core network via the wireless base station 120. Even when it is not possible to directly communicate wirelessly with the wireless base station 120, the terminal device 140 may be able to access the core network via the wireless relay device 110 and the wireless base station 120.

The mobile body 100 is equipment that is able to move. The mobile body 100 is, for example, an automobile such as a bus, or a vehicle such as a street car. The vehicle is an example of transportation equipment. An example of the mobile body 100 may include various types of aircrafts including an unmanned aerial vehicle, an artificial satellite, a ship, or the like. The mobile body 100a includes the wireless relay device 110a. The mobile body 100b includes the wireless relay device 110b. Accordingly, the wireless relay device 110a is movable together with the mobile body 100a, and the wireless relay device 110b is movable together with the mobile body 100b.

When the mobile body 100a is located in the cell 180a of the wireless base station 120a, the wireless relay device 110a relays the communication between the wireless base station 120a and the terminal device 140a that is carried by a user who is in the mobile body 100a. Further, the wireless relay device 110a relays the communication between the wireless base station 120a and the terminal device 140c located in a vicinity of the wireless relay device 110a. When the mobile body 100b is located in the cell 180b of the wireless base station 120b, the wireless relay device 110b relays the communication between the wireless base station 120b and the terminal device 140b carried by a user riding in the mobile body 100b.

In the wireless communication system 5 of the present embodiment, the wireless relay device 110 measures a communication quality of the wireless communication in the wireless relay device 110, and transmits a measurement result to the wireless base station 120. Further, the wireless relay device 110 controls an operation of the wireless relay device 110, based on setting information related to setting of the wireless relay device 110 received from the wireless base station 120. For example, the wireless relay device 110 performs processing such as processing relating to handover, processing relating to a setting change for the terminal device 140, and processing relating to roaming. This makes it possible for the wireless relay device 110 to have the function of performing a service provision to the terminal device 140, as a wireless base station; and to receive an appropriate service provision from the wireless base station 120, as a terminal device.

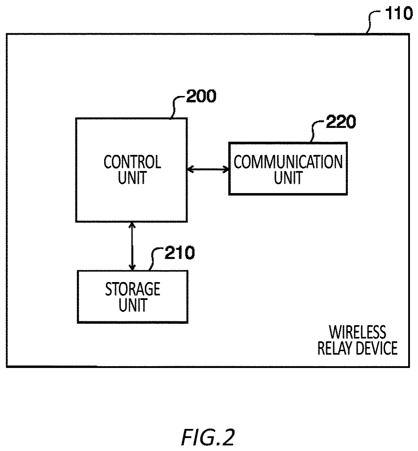

Fig. 2 shows an example of a system configuration of the wireless relay device 110. The wireless relay device 110 relays the communication between the wireless base station 120 and the terminal device 140. The wireless relay device 110 includes a control unit 200, a storage unit 210, and a communication unit 220.

The control unit 200 controls the entire wireless relay device 110. The communication unit 220 is responsible for the wireless communication with the wireless base station 120 and the terminal device 140. The control unit 200 is realized by an arithmetic processing device including a processor. The storage unit 210 is realized including a non-volatile storage medium. The control unit 200 uses information stored in the storage unit 210 to perform the processing. The control unit 200 may be realized by a microcomputer including a CPU, a ROM, a RAM, an I/O, a bus, and the like. The wireless relay device 110 may be realized by a computer. The wireless relay device 110 may be realized by a single computer. The wireless relay device 110 may be realized by a plurality of computers. The functions of the wireless relay device 110 may be realized by a virtual system that is realized by using a virtualization technology.

The control unit 200 acquires the measurement result of the communication quality in the wireless relay device 110. The communication unit 220 transmits, to the wireless base station 120, measurement information indicating the measurement result of the communication quality. The communication unit 220 further receives the setting information related to setting of the wireless relay device 110, from the wireless base station 120, according to transmission of the measurement information to the wireless base station 120. The control unit 200 further controls the operation of the wireless relay device 110 based on the setting information received from the wireless base station 120.

When the setting information is received from the wireless base station 120, the control unit 200 further generates first setting information related to setting of the terminal device 140, based on the setting information. The communication unit 220 further transmits the first setting information to the terminal device 140.

The communication unit 220 further receives, from the terminal device 140, measurement information indicating a measurement result of a communication quality in the terminal device 140. The control unit 200 further generates second setting information related to setting of the terminal device 140, based on the measurement information received from the terminal device 140. The communication unit 220 further transmits the second setting information to the terminal device 140.

The control unit 200 may further generate third setting information relating to setting of the terminal device 140. The communication unit 220 may further transmit the third setting information to the terminal device 140. The third setting information may include at least either setting information for the terminal device 140 to be in a range of the wireless relay device 110, or setting information for causing the terminal device 140 to prioritize the communication with the wireless relay device 110.

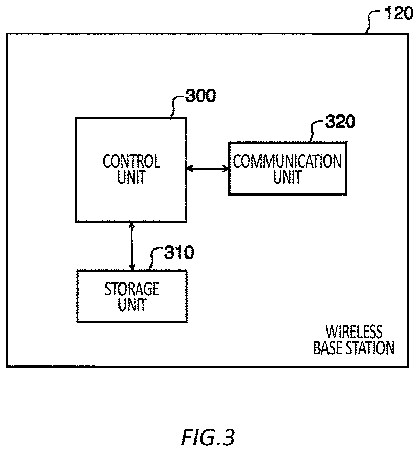

Fig. 3 shows an example of a system configuration of the wireless base station 120. The wireless base station 120 performs the communication with the terminal device via the wireless relay device 110. The wireless base station 120 includes a control unit 300, a storage unit 310, and a communication unit 320.

The control unit 300 controls the entire wireless base station 120. The communication unit 320 is responsible for the wireless communication with the wireless relay device 110 and the terminal device 140. The control unit 300 is realized by an arithmetic processing device including a processor. The storage unit 310 is realized including a non-volatile storage medium. The control unit 300 uses information stored in the storage unit 310 to perform the processing. The control unit 300 may be realized by a microcomputer including a CPU, a ROM, a RAM, an I/O, a bus, and the like. The wireless base station 120 may be realized by a computer. The wireless base station 120 may be realized by a single computer. The wireless base station 120 may be realized by a plurality of computers. The functions of the wireless base station 120 may be realized by a virtual system that is realized by using a virtualization technology.

The communication unit 320 further receives first measurement information indicating a measurement result of a communication quality in the terminal device 140. The control unit 300 further generates first setting information related to setting of the terminal device, and second setting information related to setting of the wireless relay device 110, based on the first measurement information. The communication unit 320 further transmits the first setting information to the terminal device, and transmits the second setting information to the wireless relay device 110.

The communication unit 320 further receives second measurement information indicating a measurement result of a communication quality in the wireless relay device 110. The control unit 300 further generates third setting information related to setting of the wireless relay device 110, based on the second measurement information. The communication unit 320 further transmits the third setting information to the wireless relay device 110.

The control unit 300 further generates fourth setting information related to setting of the terminal device 140, at least based on one of the second measurement information or the third setting information. The communication unit 320 further transmits the fourth setting information to the terminal device.

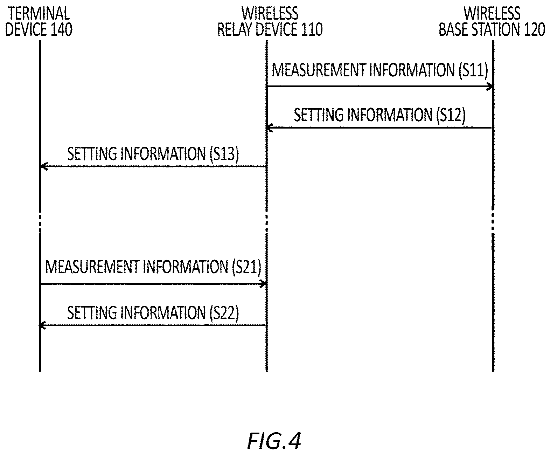

Fig. 4 shows an example of a sequence relating to a wireless communication method which is executed in the wireless communication system 5. In S11, when the communication quality is determined to satisfy a predetermined determination condition, based on the measurement result of the communication quality in the wireless relay device 110, the control unit 200 of the wireless relay device 110 generates the measurement information indicating the measurement result, and the communication unit 220 transmits the measurement information to the wireless base station 120. The measurement information may include information indicating the communication quality of a serving cell in the range and a communication quality of an adjacent cell, which are measured in the wireless relay device 110.

In S12, the control unit 300 of the wireless base station 120 generates the setting information related to setting of the wireless relay device 110 based on the measurement information received in S11, and the communication unit 320 transmits the setting information to the wireless relay device 110.

In S13, the control unit 200 of the wireless relay device 110 generates the setting information related to setting of the terminal device 140 based on the setting information received in S12, and the communication unit 220 transmits the setting information to the terminal device 140.

As an example, the setting information that is transmitted in S12 may be information for changing a setting of the wireless relay device 110 due to a change in the communication quality in the wireless relay device 110 or handover of the wireless relay device 110. For example, the setting information that is transmitted in S12 may be information for changing the determination condition for determining whether to execute a subsequent measurement and report of the communication quality in the wireless relay device 110, due to the change in the communication quality or the handover. The setting information that is transmitted to the terminal device 140 in S13 may be information for changing a setting of the terminal device 140 due to the change in the communication quality in the wireless relay device 110 or the handover of the wireless relay device 110. For example, the setting information that is transmitted in S13 may be information for changing the determination condition for determining whether to execute a subsequent measurement and report of the communication quality in the terminal device 140. The setting information that is transmitted in S13 may include cell identification information of a cell of a handover destination of the wireless relay device 110.

Next, the transmission and the reception of the measurement information and the setting information between the terminal device 140 and the wireless relay device 110 will be described. In S21, when the communication quality is determined to satisfy a predetermined determination condition, based on the measurement result of the communication quality in the terminal device 140, the terminal device 140 generates the measurement information indicating the measurement result, and transmits the measurement information to the wireless relay device 110. The measurement information may include information indicating the communication quality of a serving cell in the range and a communication quality of an adjacent cell, which are measured in the terminal device 140.

In S22, the control unit 200 of the wireless relay device 110 generates the setting information related to setting of the terminal device 140 based on the measurement information received in S21, and the communication unit 220 transmits the setting information to the terminal device 140. The setting information that is transmitted to the terminal device 140 in S22 may be information for changing the setting of the terminal device 140 due to a change in the communication quality in the terminal device 140 or handover of the terminal device 140. For example, the setting information that is transmitted in S22 may be information for changing the determination condition for determining whether to execute a subsequent measurement and report of the communication quality in the terminal device 140.

The measurement information that is transmitted in S11 and S21 may be a Measurement Report message. The setting information that is transmitted in S12, S13, and S22 may be an RRC_Connection_Reconfiguration message. The measurement information that is transmitted in S11 and S21, and the setting information that is transmitted in S12, S13, and S22 may be transmitted by using a U-Plane rather than a C-Plane. With the sequence shown in Fig. 4, even when a radio wave situation in the wireless relay device 110 is changed due to a movement or the like of the mobile body 100, it is possible to provide an appropriate procedure for the wireless relay device 110 to maintain the function as a relay device.

It should be noted that the case where the wireless relay device 110 transmits the setting information as in S13 is not limited to the case where the wireless relay device 110 receives the setting information from the wireless base station 120 as shown in Fig. 4. For example, the control unit 200 of the wireless relay device 110 may generate setting information to cause the terminal device 140, which is in the range of the wireless relay device 110, to be in the range of the wireless relay device 110 for a longer time, and the communication unit 220 may transmit the setting information to the terminal device 140. Specifically, the control unit 200 may determine a higher determination condition to make it difficult for the handover to occur, and the communication unit 220 may include the determination condition in the setting information for transmitting to the terminal device 140. In addition, the control unit 200 may generate setting information to set a priority to be "high" for being in the range of the wireless relay device 110, and the communication unit 220 may transmit the setting information to the terminal device 140. Additionally, the control unit 200 may generate setting information to prioritize the communication with the wireless relay device 110. For example, the control unit 200 may generate setting information to set a priority of a QoS to be high for a content that is provided to the terminal device 140 in a case of being in the range of the wireless relay device 110, and the communication unit 220 may transmit the setting information to terminal device 140.

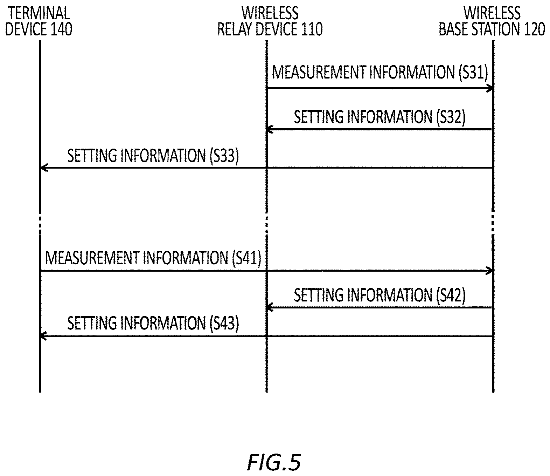

Fig. 5 shows an example of a sequence relating to a wireless communication method which is executed in the wireless communication system 5. A sequence in Fig. 5 is different from the sequence in Fig. 4, and is a sequence in a case where the wireless base station 120 serves as a main entity and performs the control.

In S31, when the communication quality is determined to satisfy a predetermined determination condition, based on the measurement result of the communication quality in the wireless relay device 110, the control unit 200 of the wireless relay device 110 generates the measurement information indicating the measurement result, and the communication unit 220 transmits the measurement information to the wireless base station 120. The measurement information may include information indicating the communication quality of a serving cell in the range and a communication quality of an adjacent cell, which are measured in the wireless relay device 110.

In S32, the control unit 300 of the wireless base station 120 generates the setting information related to setting of the wireless relay device 110 based on the measurement information received in S31, and the communication unit 320 transmits the setting information to the wireless relay device 110. The processing in S31 and the processing in S32 are the same as the processing in S11 and the processing in S12.

In S33 in the sequence in Fig. 5, unlike the sequence in Fig. 4, the control unit 300 of the wireless base station 120 generates the setting information related to setting of the terminal device 140 at least based on one of the measurement information received in S31 or the setting information transmitted in S32, and the communication unit 320 transmits the setting information to the terminal device 140.

Next, the transmission and the reception of the measurement information and the setting information between each of the terminal device 140 and the wireless relay device 110, and the wireless base station 120 will be described. In S41, when the communication quality is determined to satisfy a predetermined determination condition, based on the measurement result of the communication quality in the terminal device 140, the terminal device 140 generates the measurement information indicating the measurement result, and transmits the measurement information to the wireless base station 120. The measurement information may include information indicating the communication quality of a serving cell in the range and a communication quality of an adjacent cell, which are measured in the terminal device 140.

In S42, the control unit 300 of the wireless base station 120 generates the setting information related to setting of the wireless relay device 110 based on the measurement information received in S41, and the communication unit 320 transmits the setting information to the wireless relay device 110. Further, in S43, the control unit 300 generates the setting information related to setting of the terminal device 140, and the communication unit 320 transmits the setting information to the terminal device 140. The setting information that is transmitted to the wireless relay device 110 in S42 may be information for changing the setting of the wireless relay device 110 due to a change in the communication quality in the terminal device 140 or the handover of the terminal device 140. For example, the setting information that is transmitted in S42 may be information for changing the determination condition for determining whether to execute a subsequent measurement and report of the communication quality in the wireless relay device 110. The setting information that is transmitted in S42 may include information indicating the change in the communication quality in the terminal device 140 or terminal identification information of the terminal device 140 in which the handover has occurred.

The measurement information that is transmitted in S31 and S41 may be a Measurement Report message. The setting information that is transmitted in S32, S33, S42, and S43 may be an RRC_Connection_Reconfiguration message. The measurement information that is transmitted in S31 and S41, and the setting information that is transmitted in S32, S33, S42, and S43 may be transmitted by using a U-Plane rather than a C-Plane. With the sequence shown in Fig. 5, even when a radio wave situation in the wireless relay device 110 is changed due to a movement or the like of the mobile body 100, it is possible to provide a procedure, which is executed mainly by the wireless base station 120, for the wireless relay device 110 to maintain the function as a relay device.

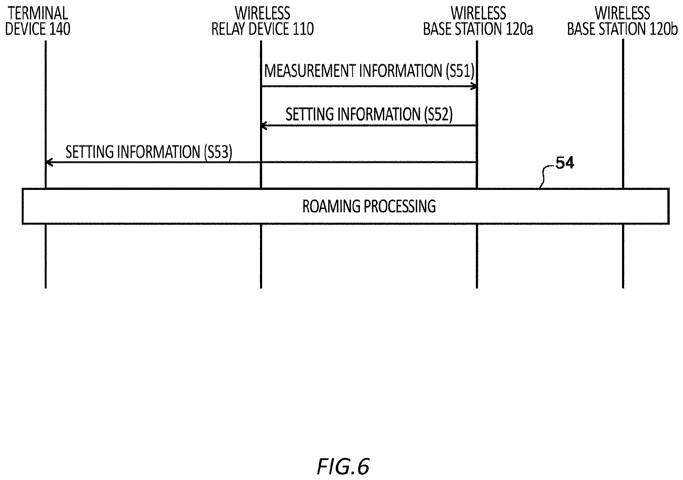

Fig. 6 shows an example of a sequence relating to a wireless communication method which is executed in the wireless communication system 5. A sequence in Fig. 6 shows a sequence when roaming occurs according to the change in the communication quality in the wireless relay device 110. When the roaming occurs, the wireless base station 120 serves as a main entity and performs the control. Accordingly, in S51, S52, and S53 in Fig. 6, the processing is performed similarly to processing of each of S31, S32, and S33 in Fig. 5, and the roaming processing is performed in S54. However, the setting information that is transmitted in S52 and the setting information that is transmitted in S53 may include information indicating a roaming source and a roaming destination.

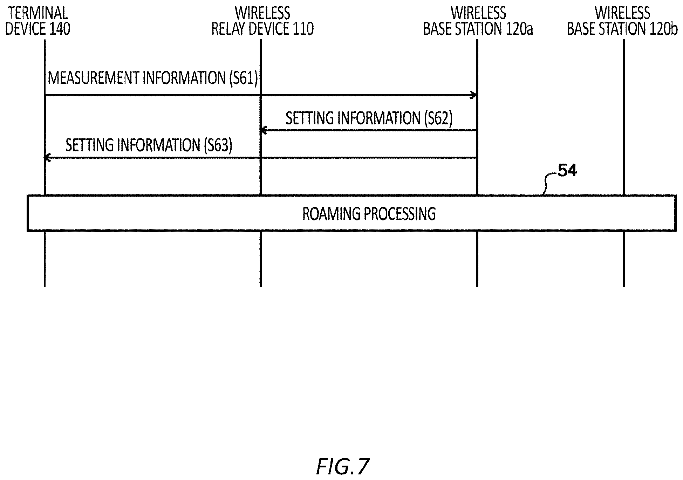

Fig. 7 shows an example of a sequence relating to a wireless communication method which is executed in the wireless communication system 5. A sequence in Fig. 7 shows a sequence when roaming occurs according to the change in the communication quality in the terminal device 140. When the roaming occurs, the wireless base station 120 serves as a main entity and performs the control. Therefore, in S61, S62, and S63 in Fig. 7, the processing is performed similarly to processing of each of S41, S42, and S43 in Fig. 5 is performed, and the roaming processing is performed in S64. Note that the setting information that is transmitted in S62 and the setting information that is transmitted in S63 may include information indicating a roaming source and a roaming destination.

With the wireless communication system 5 described above, even when a radio wave situation in the wireless relay device 110 is changed due to a movement or the like of the mobile body 100, it is possible to provide an appropriate procedure for the wireless relay device 110 to maintain the function as a relay device. Further, even when a radio wave situation in the terminal device 140, for which the wireless relay device 110 is performing a service provision as a base station, is changed, it is possible to provide an appropriate procedure for the wireless relay device 110 to execute as a base station. This makes it possible to enhance stability of the communication by the wireless relay device 110, and furthermore, makes it possible to enhance safety of traffic for the mobile body 100.

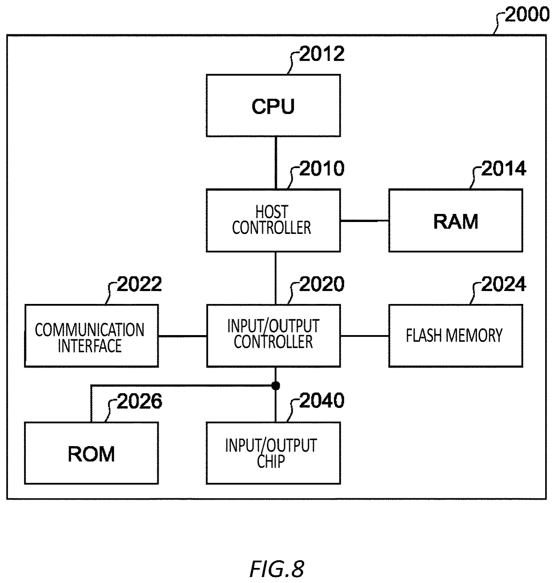

Fig. 8 shows an example of a computer 2000 in which a plurality of embodiments of the present invention can be entirely or partially embodied. The program installed on the computer 2000 can cause the computer 2000 to function as the system according to the embodiment or each unit of the system, or various devices such as the wireless base station and the wireless relay device or each unit of the device, to perform operations associated with the system or each unit of the system or the device or each unit of the device, and/or to perform a process or steps of the process according to the embodiment. Such a program may be executed by a CPU 2012 in order to cause the computer 2000 to execute a specific operation associated with some or all of the processing procedures and the blocks in the block diagrams described herein.

The computer 2000 according to the present embodiment includes the CPU 2012 and a RAM 2014, which are mutually connected by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, and thereby controls each unit.

The communication interface 2022 communicates with another electronic device via a network. The flash memory 2024 stores a program and data used by the CPU 2012 in the computer 2000. The ROM 2026 stores a boot program or the like executed by the computer 2000 upon activation, and/or a program which depends on hardware of the computer 2000. The input/output chip 2040 may also connect various input/output units such as a keyboard, a mouse, and a monitor, to the input/output controller 2020 via input/output ports such as a serial port, a parallel port, a keyboard port, a mouse port, a monitor port, a USB port, a HDMI (registered trademark) port.

A program is provided via a network or a computer-readable storage medium such as a CD-ROM, a DVD-ROM, or a memory card. The RAM 2014, the ROM 2026, or the flash memory 2024 is an example of the computer-readable storage medium. The program is installed in the flash memory 2024, the RAM 2014, or the ROM 2026, and executed by the CPU 2012. Information processing written in these programs is read by the computer 2000, and provides cooperation between the programs and the various types of hardware resources described above. A device or a method may be actualized by executing operations or processing of information according to a use of the computer 2000.

For example, when a communication is executed between the computer 2000 and an external device, the CPU 2012 may execute a communication program loaded on the RAM 2014, and instruct the communication interface 2022 to execute communication processing based on processing written in the communication program. Under the control of the CPU 2012, the communication interface 2022 reads transmission data stored in a transmission buffer processing region provided in a recording medium such as the RAM 2014 or the flash memory 2024, transmits the read transmission data to the network, and writes reception data received from the network into a reception buffer processing region or the like provided on the recording medium.

In addition, the CPU 2012 may cause all or a necessary portion of a file or a database stored in a recording medium such as the flash memory 2024 and the like to be read into the RAM 2014, and execute various kinds of processing on the data on the RAM 2014. Next, the CPU 2012 writes back the processed data into the recording medium.

Various types of information such as various types of programs, data, a table, and a database may be stored in the recording medium and may be subjected to information processing. The CPU 2012 may execute, on the data read from the RAM 2014, various kinds of processing including various kinds of operations, information processing, conditional judgement, conditional branching, unconditional branching, information retrieval/replacement, or the like described herein and specified by instruction sequences of the programs, and write back a result into the RAM 2014. In addition, the CPU 2012 may retrieve information in a file, a database, or the like in the recording medium. For example, when multiple entries each having an attribute value of a first attribute associated with an attribute value of a second attribute, is stored in the recording medium, the CPU 2012 may retrieve an entry having a designated attribute value of the first attribute that matches a condition from these multiple entries, and read the attribute value of the second attribute stored in this entry, thereby obtaining the attribute value of the second attribute associated with the first attribute that satisfies a predetermined condition.

The programs or software modules described above may be stored in the computer-readable storage medium on the computer 2000 or in the vicinity of the computer 2000. A recording medium such as a hard disk or a RAM provided in a server system connected to a dedicated communication network or the Internet can be used as the computer-readable storage medium. A program stored in the computer-readable storage medium may be provided to the computer 2000 via a network.

A program, which is installed on the computer 2000 and causes the computer 2000 to function as the wireless relay device 110, may work on a CPU 2012 or the like to cause the computer 2000 to function as each unit of the wireless relay device 110. Information processing written in these programs functions as each unit of the wireless relay device 110 that is specific means by which software and the above-described various hardware resources cooperate by being read by the computer 2000. Then, by the specific means realizing calculation or processing of information in accordance with a purpose of use of the computer 2000 in the present embodiment, the unique wireless relay device 110 in accordance with the purpose of use is constructed.

A program, which is installed on the computer 2000 and causes the computer 2000 to function as the wireless base station 120, may work on a CPU 2012 or the like to cause the computer 2000 to function as each unit of the wireless base station 120. Information processing written in these programs functions as each unit of the wireless base station 120 that is specific means by which software and the above-described various hardware resources cooperate by being read by the computer 2000. Then, by the specific means realizing calculation or processing of information in accordance with a purpose of use of the computer 2000 in the present embodiment, the unique wireless base station 120 in accordance with the purpose of use is constructed.

Various embodiments have been described with reference to the block diagrams and the like. In the block diagrams, each block may represent (1) a step of a process in which an operation is executed, or (2) each unit of the device having a role in executing the operation. A specific step and each unit may be implemented by a dedicated circuit, a programmable circuit supplied with computer-readable instructions stored on a computer-readable storage medium, and/or a processor supplied with computer-readable instructions stored on a computer-readable storage medium. The dedicated circuit may include a digital and/or analog hardware circuit, or may include an integrated circuit (IC) and/or a discrete circuit. The programmable circuit may include a reconfigurable hardware circuit including logical AND, logical OR, logical XOR, logical NAND, logical NOR, and another logical operation, and a memory element or the like such as a flip-flop, a register, a field programmable gate array (FPGA), a programmable logic array (PLA), or the like.

The computer-readable storage medium may include any tangible device capable of storing instructions to be executed by an appropriate device, and as a result, the computer-readable storage medium having instructions stored therein forms at least a part of a product including instructions which can be executed to provide means for executing processing procedures or operations specified in the block diagrams. An example of the computer-readable storage medium may include an electronic storage medium, a magnetic storage medium, an optical storage medium, an electromagnetic storage medium, a semiconductor storage medium, or the like. A more specific example of the computer-readable storage medium may include a floppy (registered trademark) disk, a diskette, a hard disk, a random-access memory (RAM), a read-only memory (ROM), an erasable programmable read-only memory (EPROM or flash memory), an electrically erasable programmable read-only memory (EEPROM), a static random-access memory (SRAM), a compact disc read-only memory (CD-ROM), a digital versatile disc (DVD), a Blu-ray (registered trademark) disc, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

Computer-readable instructions may be provided to a processor of a general purpose computer, a special purpose computer, or another programmable data processing apparatus, or to programmable circuit, locally or via a local area network (LAN), wide area network (WAN) such as the Internet or the like, and a computer-readable instruction may be executed to provide means for executing operations specified in the described processing procedures or block diagrams. Examples of the processor include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations and improvements can be added to the above-described embodiments. It is also apparent from the scope of the claims that the embodiments added with such alterations or improvements can be included in the technical scope of the invention.

It should be noted that the operations, procedures, steps, stages, or the like of each process performed by a device, system, program, and method shown in the claims, the specification, or the drawings can be performed in any order as long as the order is not indicated by "prior to," "before," or the like and as long as the output from a previous process is not used in a later process. Even if the process flow is described using phrases such as "first" or "next" in the claims, the specification, or the drawings for the sake of convenience, it does not necessarily mean that the process must be performed in this order.

### EXPLANATION OF REFERENCES

5: wireless communication system
100: mobile body
110: wireless relay device
120: wireless base station
140: terminal device
180: cell
200: control unit
210: storage unit
220: communication unit
300: control unit
310: storage unit
320: communication unit
2000: computer
2010: host controller
2012: CPU
2014: RAM
2020: input/output controller
2022: communication interface
2024: flash memory
2026: ROM
2040: input/output chip.

## Claims

1. A wireless relay device which relays a communication between a terminal device and a wireless base station, the wireless relay device comprising:
a control unit which acquires a measurement result of a communication quality in the wireless relay device; and
a communication unit which transmits, to the wireless base station, measurement information indicating the measurement result of the communication quality, wherein
the communication unit further receives setting information related to setting of the wireless relay device, from the wireless base station, according to transmission of the measurement information to the wireless base station, and
the control unit further controls an operation of the wireless relay device based on the setting information received from the wireless base station.

2. The wireless relay device according to claim 1, wherein
when the setting information is received from the wireless base station, the control unit further generates first setting information related to setting of the terminal device, based on the setting information, and
the communication unit further transmits the first setting information to the terminal device.

3. The wireless relay device according to claim 1 or 2, wherein
the communication unit further receives, from the terminal device, measurement information indicating a measurement result of a communication quality in the terminal device,
the control unit further generates second setting information related to setting of the terminal device, based on the measurement information received from the terminal device, and
the communication unit further transmits the second setting information to the terminal device.

4. The wireless relay device according to claim 1 or 2, wherein
the control unit further generates third setting information relating to setting of the terminal device,
the communication unit further transmits the third setting information to the terminal device, and
the third setting information includes at least either setting information for the terminal device to be in a range of the wireless relay device, or setting information for causing the terminal device to prioritize a communication with the wireless relay device.

5. A mobile body comprising: the wireless relay device according to claim 1 or 2.

6. A program for causing a computer to function as the wireless relay device according to claim 1 or 2.

7. A wireless communication system comprising:
the wireless relay device according to claim 1 or 2; and
the wireless base station.

8. A wireless base station which performs a communication with a terminal device via a wireless relay device, the wireless base station comprising:
a communication unit which receives first measurement information indicating a measurement result of a communication quality in the terminal device; and
a control unit which generates first setting information related to setting of the terminal device, and second setting information related to setting of the wireless relay device, based on the first measurement information, wherein
the communication unit further transmits the first setting information to the terminal device, and transmits the second setting information to the wireless relay device.

9. The wireless base station according to claim 8, wherein
the communication unit further receives second measurement information indicating a measurement result of a communication quality in the wireless relay device,
the control unit further generates third setting information related to setting of the wireless relay device, based on the second measurement information, and
the communication unit further transmits the third setting information to the wireless relay device.

10. The wireless base station according to claim 9, wherein
the control unit further generates fourth setting information related to setting of the terminal device, at least based on one of the second measurement information or the third setting information, and
the communication unit further transmits the fourth setting information to the terminal device.

11. A wireless communication system comprising:
the wireless base station according to any one of claims 8 to 10; and
the wireless relay device.

12. A program for causing a computer to function as the wireless base station according to any one of claims 8 to 10.

13. A wireless communication method that is executed by a wireless relay device which relays a communication between a terminal device and a wireless base station, the wireless communication method comprising:
acquiring a measurement result of a communication quality in the wireless relay device;
transmitting, to the wireless base station, measurement information indicating the measurement result of the communication quality;
receiving setting information related to setting of the wireless relay device, from the wireless base station, according to transmission of the measurement information to the wireless base station; and
controlling an operation of the wireless relay device based on the setting information received from the wireless base station.

14. A wireless communication method that is executed by a wireless base station which performs a communication with a terminal device via a wireless relay device, the wireless communication method comprising:
receiving first measurement information indicating a measurement result of a communication quality in the terminal device;
generating first setting information related to setting of the terminal device, and second setting information related to setting of the wireless relay device, based on the first measurement information; and
transmitting the first setting information to the terminal device, and transmits the second setting information to the wireless relay device.
